Europäisches Patentamt

European Patent Office    (11) Publication number: **0 074 373**

Office européen des brevets    **B1**

⑱

(12) **EUROPEAN PATENT SPECIFICATION**

(45) Date of publication of patent specification: 05.06.85    (51) Int. Cl.⁴: **B 23 K 35/22,** B 23 K 11/34,
C 09 K 3/10

(21) Application number: **82900817.6**

(22) Date of filing: **22.03.82**

(86) International application number:
**PCT/GB82/00090**

(87) International publication number:
**WO 82/03352 14.10.82 Gazette 82/25**

(54) SEALANT COMPOSITION AND ITS USE IN WELDING.

<table>
<tr><td>

(30) Priority: **24.03.81 GB 8109152**

(43) Date of publication of application:
**23.03.83 Bulletin 83/12**

(45) Publication of the grant of the patent:
**05.06.85 Bulletin 85/23**

(84) Designated Contracting States:
**DE FR GB SE**

(56) References cited:
**FR-A- 825 910**
**GB-A- 669 736**
**GB-A- 697 462**
**US-A-2 452 805**
**US-A-2 506 728**
**US-A-2 726 308**
**US-A-3 791 850**
**US-A-4 079 163**

</td><td>

(73) Proprietor: **BOSTIK GMBH**
**Gattenhoferweg 36 Postfach 1260**
**D-6370 Oberursel/Taunus (DE)**
㊼ **DE**

(73) Proprietor: **BOSTIK S.A.**
**Boite Postal No. 24**
**F-93801 Epinay-Sur-Seine (FR)**
㊼ **FR**

(73) Proprietor: **BOSTIK LIMITED**
**Ulverscroft Works Ulverscroft Road**
**Leicester LE4 6BW (GB)**
㊼ **GB**

(73) Proprietor: **BOSTIK A.B.**
**P.O. Box 903**
**S-251 09 Helsingborg (SE)**
㊼ **SE**

(72) Inventor: **SYMIETZ, Detlef, Dr.**
**Zedernweg 5**
**D-6370 Oberursel 6 (DE)**

(74) Representative: **Bullows, Michael et al**
**USMC International Limited Patents**
**Department P.O. Box No. 88 Belgrave Road**
**Leicester LE4 5BX (GB)**

</td></tr>
</table>

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

### Technical field

This invention is concerned with a sealant composition, and with methods of welding in which the sealant composition is employed.

### Background art

It is a practice, for example, in the automotive industry, to secure steel and other ferrous metal parts together by a spot welding process. It is also a practice to employ a sealant composition between the welded metal parts which is intended to prevent ingress of moisture between them. If the seal is imperfect, moisture may penetrate between the welded parts which may lead to corrosion. We have observed that within such joints the onset of corrosion is noticed particularly in the region of the welds. It would be highly advantageous if one could provide a sealant composition which can be used in such a process and which is capable of leading to a reduced level of corrosion within the joint.

It is known to employ metallic zinc in compositions for corrosion resistant treatments, for example, paints. However, in order to obtain an adequate level of corrosion resistance it is usual to employ sufficient zinc to ensure that the layer of composition laid down from the composition has a substantial amount of zinc at its surface in order to exhibit a corrosion resistant effect. It is usual to employ in excess of 60% zinc by weight of the composition. Use of such substantial quantities of zinc in permanently plastic deformable sealant compositions tends to adversely influence the sealing properties of the composition.

From US—A—2726308 is known a method of spot welding, wherein to a face of at least one of the sheets of metal to be welded together there is applied a thin coating of a flow-coatable suspension of a finely divided metal in a liquid dispersion of film-forming organic material in a volatile vehicle or solvent for it, the evaporation of which vehicle or solvent leaves on the sheet metal a firmly adhering skin of finely divided metal dispersed in a dry-to-the-touch, non-tacky, continuous and wholly adherent film of the organic material. Coating compositions are disclosed in which the finely divided metal can be for example zinc and the liquid dispersion of film forming organic material may be for example thermoplastic synthetic polymeric material in the volatile vehicle or solvent for it; the finely divided metal may be used to an extent of up to 15% by weight of the total composition. After application to a metal surface the vehicle or solvent evaporates to leave a firmly adhering skin of approximately 0.0025 mm thickness of finely divided metal in the film of organic material.

### Disclosure of the invention

Surprisingly we have now found that sealant compositions suitable for use as spot welding sealants and which are based upon thermoplastic synthetic polymeric materials and which include comparatively small amounts of finely divided zinc may be used in a spot welding process to yield joints which are remarkably less prone to corrosion.

The invention provides in one of its various aspects a thermoplastic sealant composition deformable under light pressure at room temperature and capable of application in the form of a plastic mass to metal parts and of providing a deformable seal bonded to the metal parts after the metal parts have been secured together by spot welding with the sealant between them, characterised in that the sealant composition comprises thermoplastic synthetic polymeric material comprising 5 to 50% by weight of the composition butyl rubber, 5 to 50% by weight of the composition polybutene and 0 to 20% by weight of the composition polyisobutylene and finely divided zinc to an extent of up to 15% by weight of the composition.

The sealant composition is suitably substantially free of solvent and may be applied at elevated temperatures, for example, at 100 to 150°C, for example, by means of a pump, or at room temperature as a preformed strip or foil. The composition is to some extent plastic or deformable under comparatively light pressure at room temperature (i.e. 20±3°C), and retains this characteristic to a high degree during its working life.

Naturally, it is important to select a composition which will not give rise to safety or other hazards during handling or use. In particular, temperatures reached during spot welding may be of the order of 1000°C or more and it is therefore important to select a sealant composition which can be used at such temperatures. For example, the sealant composition must not degrade completely, nor must it flow from the joint to an undesirable extent.

It is highly desirable that the sealant composition has adequate tackiness and adhesion characteristics to ensure desired permanence of bonding of the composition to the metal parts to be sealed. Some ability to flow a little to take up progressive changes in shape of the metal parts may also be desirable but it is of importance to ensure that the sealant does not sag significantly or flow out of the joint during normal conditions of use. In addition, it is important that the sealant composition does not permit transmission of moisture through the joint to a significant extent and thus a sealant composition of low moisture vapour transmission rate is highly desirable. Preferred polymeric materials for the sealant composition are polybutenes and polyisobutylenes, although other polymeric materials are contemplated, for example, ethylene vinyl acetate copolymers, polyethylene, atactic polypropylene, butyl rubber and mixtures thereof. These polymeric materials may be compounded with other polymers, e.g. thermoplastic block copolymers, tackifying or other resins, for example rosin, rosin ester, hydrocarbon resin (e.g. a betapinene or coumarone-indene resin), melamine formaldehyde resins, phenolic resins, terpene resins, and other resins known in the adhesives art. Waxes, extending oils and plasticisers may also be employed in the composition to achieve a sealant composition having a desirable blend of properties in application and use as mentioned above.

Preferred compositions comprise butyl rubber to an extent of 10 to 20% by weight of the composition, polybutene to an extent of 15 to 30% by weight of the composition, polyisobutylene to an extent of 4 to 15% by weight of the composition, finely divided inorganic compound to an extent of 10 to 50% more preferably 20 to 35% by weight of the composition and tackifying resin to an extent of 5 to 50% more preferably 10 to 20% by weight of the composition.

The zinc used is finely divided in order to enable thorough and uniform dispersion throughout the sealant composition, and to facilitate heating of the zinc during spot welding. Whilst particle sizes and their distribution in the zinc do not seem to be especially important, we prefer to use zinc powder having a particle size of about $10^{-3}$ mm. It will be appreciated that a uniform distribution of the zinc throughout the composition is important in order reproducibly to achieve desired corrosion protection.

In carrying out a method according to the invention, metal e.g. mild steel parts intended to be spot welded together are prepared and brought together, with those parts which are to be spot welded together aligned in overlapping relationship. Preparation of the parts is carried out to an appropriate extent in accordance with the condition of the metal. Some oil on the metal is not detrimental, for example, freshly pressed steel sheets for use in manufacture of car bodies normally require no descaling or degreasing, whereas corroded or heavily oiled steel may require descaling and or degreasing prior to spot welding. Following alignment of the parts, a mass of sealant composition is applied to one of the metal parts e.g. as a foil, and the parts are pressed together with the composition between the parts to provide a foil of composition about 0.5 to 1 mm thick between the parts. The foil is arranged to be of sufficient size to extend up to the exposed edge of the joint and to extend between the metal parts in those areas which are to be spot welded.

The parts are clamped in the desired location.

The location for spot welds is marked, and a conventional spot welding device applied to weld the parts together. Welds are formed through the sealant composition.

We have found that even small amounts of zinc are beneficial in reducing the incidence of corrosion on the steel parts joined by spot welding using a sealant composition according to the invention. Amounts as small as 1% properly distributed through the sealant mass show a significant effect, amounts of about 5% and about 10% show more significant effects, and it appears unnecessary to employ amounts in excess of 15% by weight of the composition in order to achieve a highly acceptable level of corrosion resistance.

This is surprising in view of the previous understanding in the art that substantial quantities of zinc are necessary in order to achieve an acceptable level of corrosion resistance. The reason for this surprising result is not fully understood. However, without wishing to be bound by any particular theory, one can postulate that during application of heat at the time of spot welding, the organic content of the sealant composition immediately adjacent the point of welding is decomposed or burned away. One could suppose that zinc metal is vapourised at this time and becomes deposited on the metal immediately adjacent the weld. Possibly a galvanising of the metal occurs, or possibly an alloying occurs at the surface of steel parts, rendering the metal parts thereafter more resistant to corrosion.

The invention provides in another of its aspects a method in which metal parts are joined together by welding with a sealant composition interposed between the parts characterised in that the sealant composition is deformable under light pressure at room temperature and capable of application in the form of a plastic mass to the metal parts and of providing a deformable seal bonded to the metal parts after the metal parts have been secured together by spot welding and comprises thermoplastic synthetic polymeric material comprising 5 to 50% by weight of the composition butyl rubber, 5 to 50% by weight of the composition polybutene, and 0 to 20% by weight of the composition polyisobutylene and finely divided zinc to an extent of up to 15% by weight of the composition.

Mode of carrying out the invention

In order that the invention may become more clear there now follows by way of example a detailed description of three illustrative sealant compositions containing different amounts of zinc powder, and their use in spot welding of metal parts. It is to be clearly understood that the illustrative compositions and methods have been selected for description to illustrate the invention by way of example only and are not by way of limitation thereof.

The example compositions comprised an intimate mixture of thermoplastic synthetic polymeric material, fillers, extender oil and rosin together with varying amounts of zinc powder. A masterbatch composition was made up comprising the following materials.

| Ingredients | Parts by weight |
|---|---|
| Polybutene | 25 |
| Polyisobutylene | 5 |
| Butyl rubber | 15 |
| Finely divided CaCO$_3$ | 30 |
| Extender oil | 4 |
| Rosin | 15 |
| Block copolymer (A-B-A Type) | 5 |
| Pigment | 0.5 |
| Antioxidant | 0.5 |

A comparative example sealant composition consisted of a portion of the masterbatch composition. Illustrative sealant compositions 1, 2 and 3 comprised portions of the masterbatch composition, and a further 1, 5 and 10 parts by weight respectively of finely divided zinc powder per hundred parts by weight of the masterbatch composition. The first, second and third illustrative sealant compositions thus comprised 1, 4.8 and 9% by weight finely divided zinc.

Four sets of test samples were prepared as follows. Sheets of each sealant composition approximately 0.5 to 1 mm thick were placed between pairs of sheets of steel 25 mm by 25 mm which had been degreased and descaled prior to application of the sealant. The metal plates were pressed together with the sealant between them. A centre punch was used to mark the location of spot welds on the plates. Spot welds were formed at the marks by the method described above. After cooling in a flow of nitrogen, excess sealant was removed from the plates.

The samples were aged at 60°C and 95% humidity. The bond strength of the welded joints was determined by a tensile shear test, and the progress of corrosion within the joint was assessed by observation at time intervals of 1 week, 1 month, 4 months and 8 months. The results are shown in Table 1. In Table 1 the comparative example composition is designated "0" and the first, second and third illustrative examples are designated 1, 5 and 10.

From Table 1 it can be seen that the samples including the third illustrative composition showed considerably less evidence of corrosion than those which included the comparative example composition, particularly at the 4 and 8 month determinations.

From an inspection of the values for bonding strength given in Table 1 it can be seen that the bond strength also is influenced by the zinc content of the composition.

For samples aged for 1 week or 1 month, the bonding strengths achieved are substantially of the same order. However, for samples aged for 4 or 8 months, in line with corrosion results, the order of values for the bond strengths for samples including the comparative example composition are less, by a factor of about two times than those for samples including the third illustrative composition. With samples aged 4 or 8 months, the samples including the first and second illustrative compositions also show a higher bond strength than the samples including the compartive example composition.

TABLE 1

| Ageing time at 60°C/95% humidity | Example compositions | Bonding strength (Newton) | Corrosion assessment | Number of samples tested |
|---|---|---|---|---|
| 1 week | 0 | 7500 | 3×slight, 1×none, 1×distinct | 5 |
| | 1 | 7300 | 1×slight, 4×none | 5 |
| | 5 | 8300 | 1×slight, 2×none, 2×distinct | 5 |
| | 10 | 6700 | 2×slight, 3×none | 5 |
| 1 month | 0 | 8100 | 3×slight, 1×none, 1×distinct | 5 |
| | 1 | 9400 | 1×slight, 4×none | 5 |
| | 5 | 8100 | 1×slight, 2×none, 2×distinct | 5 |
| | 10 | 7800 | 2×slight, 3×none | 5 |
| 4 months | 0 | 5900 | 1×intense | 1 |
| | 1 | 8600 | 2×slight | 2 |
| | 5 | 8200 | 2×none | 2 |
| | 10 | 10200 | 1×slight, 1×none | 2 |
| 8 months | 0 | 5400 | 1×distinct, 1×intense | 2 |
| | 1 | 7500 | 1×slight, 3×none, 1×distinct | 5 |
| | 5 | 8700 | 2×none, 1×distinct | 3 |
| | 10 | 9100 | 1×slight, 2×none | 3 |

## Claims

1. A thermoplastic sealant composition deformable under light pressure at room temperature and capable of application in the form of a plastic mass to metal parts and of providing a deformable seal bonded to the metal parts after the metal parts have been secured together by spot welding with the sealant between them, characterised in that the sealant composition comprises thermoplastic synthetic polymeric material comprising 5 to 50% by weight of the composition butyl rubber, 5 to 50% by weight of the composition polybutene and 0 to 20% by weight of the composition polyisobutylene and finely divided zinc to an extent of up to 15% by weight of the composition.

2. A composition according to claim 1 comprising 10 to 50% by weight finely divided inorganic compound as filler.

3. A composition according to either one of claims 1 and 2 characterised in that the zinc is present to an extent of 10% by weight of the composition.

4. A sealant composition according to any one of the preceding claims comprising 5 to 50% by weight of a tackifying resin.

5. A thermoplastic sealant composition deformable under light pressure at room temperature and comprising 15 to 30% by weight polybutene, 10 to 20% by weight butyl rubber, 10 to 20% by weight tackifying resin, 20 to 35% by weight finely divided inorganic compound and 0.5 to 15% by weight finely divided zinc.

6. A method in which metal parts are joined together by welding with a sealant composition interposed between the parts characterised in that the sealant composition is deformable under light pressure at room temperature and capable of application in the form of a plastic mass to the metal parts and of providing a deformable seal bonded to the metal parts after the metal parts have been secured together by spot welding and comprises thermoplastic synthetic polymeric material comprising 5 to 50% by weight of the composition butyl rubber, 5 to 50% by weight of the composition polybutene, and 0 to 20% by weight of the composition polyisobutylene and finely divided zinc to an extent of up to 15% by weight of the composition.

7. A method according to claim 6 characterised in that the sealant composition is applied to one of the metal parts and the parts are pressed together to provide a foil of composition from 0.5 to 1 mm thick between the parts.

8. A method according to claim 7 characterised in that the sealant composition is applied at 100°C to 150°C by means of a pump, or at room temperature as a preformed strip or foil.

## Patentansprüche

1. Härtbares Abdichtungsmittel, das unter geringem Druck bei Raumtemperatur verformbar ist und in der Form einer plastischen Masse auf Metallteile auftragbar ist und eine verformbare Abdichtung schafft, welche an den Metallteilen haftet, nachdem die Metallteile miteinander mittels Punktschweißens befestigt sind, wobei zwischen ihnen das Abdichtungsmittel vorhanden ist, dadurch gekennzeichnet, daß das Abdichtungsmittel ein thermoplastisches synthetisches Polymermaterial umfaßt, das aus 5 bis 50 Gew.-% Butylkautschuk, 5 bis 50 Gew.-% Polybuten und 0 bis 20 Gew.-% Polyisobutylen sowie bis zu 15 Gew.-% feinverteiltem Zink besteht.

2. Abdichtungsmittel nach Anspruch 1, dadurch gekennzeichnet, daß es 10 bis 50 Gew.-% einer feinverteilten anorganischen Verbindung als Füllmittel umfaßt.

3. Abdichtungsmittel nach einem der Ansprüche 1 bis 2, dadurch gekennzeichnet, daß das Zink bis zu einem Gehalt von 10 Gew.-% vorhanden ist.

4. Abdichtungsmittel nach einem der vorhergehenden Ansprüche, dadurch gekennzeichnet, daß es 5 bis 50 Gew.-% klebrig machendes Harz umfaßt.

5. Härtbares Abdichtungsmittel, welches unter geringem Druck bei Raumtemperatur verformbar ist, dadurch gekennzeichnet, daß es aus 15 bis 30 Gew.-% Polybuten, 10 bis 20 Gew.-% Butylkautschuk, 10 bis 20 Gew.-% klebrig machendem Harz, 20 bis 35 Gew.-% einer feinverteilten anorganischen Verbindung und 0,5 bis 15 Gew.-% feinverteiltem Zink besteht.

6. Verfahren zum Verbinden von Metallteilen durch Schweißen mit zwischen den Teilen angeordnetem Abdichtungsmittel, dadurch gekennzeichnet, daß das Abdichtungsmittel unter geringem Druck bei Raumtemperatur verformbar ist und in der Form einer plastischen Masse auf die Metallteile aufgetragen wird und eine verformbare Abdichtung schafft, die an den Metallteilen haftet, nachdem die Metallteile durch Punktschweißen miteinander verbunden sind und daß das Abdichtungsmittel ein thermoplastisches synthetisches Polymermaterial umfaßt, das aus 5 bis 50 Gew.-% Butylkautschuk, 5 bis 50 Gew.-% Polybuten, 0 bis 20 Gew.-% Polyisobutylen und bis zu 15 Gew.-% feinverteiltem Zink besteht.

7. Verfahren nach Anspruch 6, dadurch gekennzeichnet, daß das Abdichtungsmittel auf eines der Metallteile aufgetragen wird und die Teile zusammengedrückt werden, um eine Folie des Mittels zwischen den Teilen zu schaffen, die eine Dicke von 0,5 bis 1 mm aufweist.

8. Verfahren nach Anspruch 7, dadurch gekennzeichnet, daß das Abdichtungsmittel bei 100°C bis 150°C mittels einer Pumpe oder bei Raumtemperatur als vorgeformter Streifen oder als Folie aufgetragen wird.

## Revendications

1. Composition de matériau d'étanchéité thermoplastique déformable sous une légère pression à la température ambiante et susceptible d'application sous la forme d'une masse plastique à des pièces métalliques et fournissant un joint déformable lié aux pièces métalliques après que les pièces métalliques ont été fixées l'une à l'autre par soudage par points avec le matériau d'étanchéité entre elles, caractérisée en ce que la composition de matériau d'étanchéité comprend une matière polymère synthétique thermoplastique comprenant 5 à 50% en poids de la composition de caoutchouc butyl, 5 à 50% en poids de la composition de polybutène et 0 à 20% en poids de la composition de polyisobutylène et du zinc finement divisé jusqu'à une concentration de 15% en poids de la composition.

2. Composition suivant la revendication 1, comprenant 10 à 50% en poids de composé minéral finement divisé comme charge.

3. Composition suivant l'une des revendications 1 et 2, caractérisée en ce que le zinc est présent à raison de 10% en poids de la composition.

4. Composition de matériau d'étanchéité suivant l'une quelconque des revendications précédentes, comprenant 5 à 50% en poids d'une résine adhésivante.

5. Composition de matériau d'étanchéité thermoplastique déformable sous une pression légère à la température ambiante et comprenant 15 à 30% en poids de polybutène, 10 à 20% en poids de caoutchouc butyl, 10 à 20% en poids de résine adhésivante, 20 à 35% en poids de composé minéral finement divisé et 0,5 à 15% en poids de zinc finement divisé.

6. Procédé dans lequel des pièces métalliques sont unies ensemble par soudage avec une composition de matériau d'étanchéité interposée entre les pièces, caractérisé en ce que la composition de matériau d'étanchéité est déformable sous une légère pression à la température ambiante et susceptible d'être appliquée sous la forme d'une masse plastique aux pièces métalliques et de fournir un joint déformable lié aux pièces métalliques après que les pièces métalliques ont été fixées ensemble par soudage par points et comprend une matière polymère synthétique thermoplastique comprenant 5 à 50% en poids de la composition de caoutchouc butyl, 5 à 50% en poids de la composition de polybutène et 0 à 20% en poids de la composition de polyisobutylène et du zinc finement divisé dans une proportion allant jusqu'à 15% en poids de la composition.

7. Procédé suivant la revendication 6, caractérisé en ce que la composition de matériau d'étanchéité est appliquée sur l'une des pièces métalliques et en ce que les pièces sont pressées l'une contre l'autre pour fournir une feuille de composition de 0,5 à 1 mm d'épaisseur entre les pièces.

8. Procédé suivant la revendication 7, caractérisé en ce que la composition de matériau d'étanchéité est appliquée à 100°C à 150°C au moyen d'une pompe, ou à la température ambiante sous la forme d'une bande ou feuille préformée.